**Europäisches Patentamt**

**European Patent Office**

**Office européen des brevets**

(19)

(11) Veröffentlichungsnummer : **0 012 936**
**B1**

(12) **EUROPÄISCHE PATENTSCHRIFT**

(45) Veröffentlichungstag der Patentschrift :
17.06.81

(51) Int. Cl.³ : **F 24 D 19/10, G 05 D 23/19**

(21) Anmeldenummer : **79105110.5**

(22) Anmeldetag : **12.12.79**

(54) Verfahren zum Optimieren des Energieverbrauchs in Gebäuden sowie Anordnung zur Durchführung des Verfahrens.

(30) Priorität : 21.12.78 DE 2855227

(43) Veröffentlichungstag der Anmeldung :
09.07.80 (Patentblatt 80/14)

(45) Bekanntmachung des Hinweises auf die Patenterteilung : 17.06.81 Patentblatt 81/24

(84) Benannte Vertragsstaaten :
CH FR GB IT NL SE

(56) Entgegenhaltungen :
DE - A1 - 2 505 683
DE - A1 - 2 737 399
DE - A1 - 2 805 773
DE - A1 - 2 809 770
DE - B2 - 2 630 920
GB - A - 1 193 711

CONTROL ENGINEERING,
Band 26, Nr. 1, Januar 1979, New York
H. MORRIS « A look at the new programmable
temperature controllers »
Seiten 40 bis 42

ELECTRONIQUE ET APPLICATIONS INDUS-
TRIELLES,
Nr. 248, März 1978
M. OUAKNINE « Structure et fonctionnement
d'un système de régulation de pH et de température »
Seiten 37 bis 41

(73) Patentinhaber : HONEYWELL GMBH
Kaiserleistrasse 55
D-6050 Offenbach am Main (DE)

(72) Erfinder : Scheler, Manfred, Dipl.-Ing.
Tulpenstrasse 8
D-6053 Obertshausen (DE)
Erfinder : Daab, Heinz, Ing. (grad).
Sudetenstrasse 37
D-6081 Stockstadt (DE)

(74) Vertreter : Rentzsch, Heinz et al
Honeywell Europe S.A. Holding KG Kaiserleistrasse
55
D-6050 Offenbach am Main (DE)

## Verfahren zum Optimieren des Energieverbrauchs in Gebäuden sowie Anordnung zur Durchführung des Verfahrens

Die vorliegende Erfindung bezieht sich auf ein Verfahren nach dem Gattungsbegriff des Anspruches 1 sowie auf eine Anordnung zur Durchführung des Verfahrens.

Es ist beispielsweise aus der GB-A-1 193 711 bekannt, bei Gebäude-Heizsystemen in Abhängigkeit von der gemessenen Außentemperatur, ausgehend von einer bestimmten Nacht-temperatur, den Aufheiz-Zeitpunkt zu verändern, so daß beim Beginn der Gebäudebelegung eine gewünschte Temperatur erreicht ist. Dieser Betrieb führt zu einer wesentlichen Energieersparnis. Der gewählte veränderliche Zeitpunkt für die Einschaltung des Heizsystems ist hierbei außer von der Außentemperatur von weiteren Parametern, wie zum Beispiel der tatsächlichen Temperatur eines Bezugsraumes, den Gebäudeparametern, den Kenndaten des Heizsystems, der Belegzeit des Gebäudes und dem eingestellten Temperatursollwert des Bezugsraumes abhängig. Bestimmte Kenndaten, wie beispielsweise die Gebäudeparameter lassen sich im bekannten Fall nur durch eine Handeinstellung bzw. durch eine empirische Festlegung des Einschaltzeitpunktes fest vorgeben. Auch wird bisland der Ausschaltzeitpunkt unveränderlich durch das Ende der Gebäudebelegung festgelegt.

Die begrenzte Voreinstellmöglichkeit von Steuerprogrammen des bekannten Systems wird gemäß der DE-A1-2 805 773 durch die Verwendung eines digitalen Speichers verbessert, der Informationen für längere Zeitintervalle speichern kann, wobei ein Rechner mit diesen Informationen und unter Berücksichtigung von bestimmten Faktoren, wie Innen- und Außentemperatur, thermische Gebäudeträgheit usw. den geeigneten Einschaltzeitpunkt ermittelt. Auch das mit diesem System ausgeübte Verfahren führt noch nicht zu einer optimalen Energieersparnis, da beispielsweise die Werte für die thermische Gebäudeträgheit nur empirisch vorgegeben werden können.

Ausgehend von den bekannten Verfahren zur Temperaturregelung ist es die Aufgabe der vorliegenden Erfindung, diese Verfahren so zu verbessern, daß eine noch weitergehende Energieersparnis erzielt wird, indem die Gebäudeparameter exakt ermittelt werden. Die Lösung dieser Aufgabe gelingt gemäß dem im Anspruch 1 gekennzeichneten Verfahren. Weitere vorteilhafte Ausgestaltungen des Verfahrens sowie eine Anordnung zur Durchführung des Verfahrens sind den Unteransprüchen entnehmbar. Das erfindungsgemäße Verfahren zeichnet sich insbesondere durch folgende Punkte aus :

1. Das Verfahren ist anwendbar auf Gebäude mit Heizbetrieb und/oder Kühlbetrieb.

2. Durch die exakte Messung der tatsächlichen Gebäudewerte können die optimalen Ein- bzw. Ausschaltzeiten genauer ermittelt werden als durch empirische Voreinstellungen.

3. Bei längerfristigen Änderungen der Gebäudeparameter (z. B. Heizungsauslegung) erfolgt eine automatische Anpassung an die veränderte Situation.

4. Durch das vorzeitige Abschalten vor Ende der Belegzeiten wird die im Gebäude und dessen Einrichtungen gespeicherten Energie optimal ausgenutzt.

Im Zusammenhang mit der Verwendung eines Mikroprozessors für die Berechnung der Ein-bzw. Ausschaltzeit des Heizsystems kann die Belegungszeit des Gebäudes über einen längeren Zeitraum von beispielsweise einem Jahr programmiert werden. Aufgrund der Berechnung und Fortschreibung sowie Speicherung der Parameter für das Gebäude und das Heizsystem kann jegliche Handeinstellung bzw. empirische Einstellung entfallen. Das System arbeitet extrem genau und zuverlässig.

Anhand eines in den Figuren der beiliegenden Zeichnung dargestellten Ausführungsbeispieles sei die Erfindung im folgenden näher erläutert. Es zeigen :

Fig. 1 ein Blockdiagramm eines Systems zur Durchführung des erfindungsgemäßen Verfahrens ; und

Fig. 2-6 verschiedene Diagramme zur Erläuterung der durch das System durchgeführten Berechnungen.

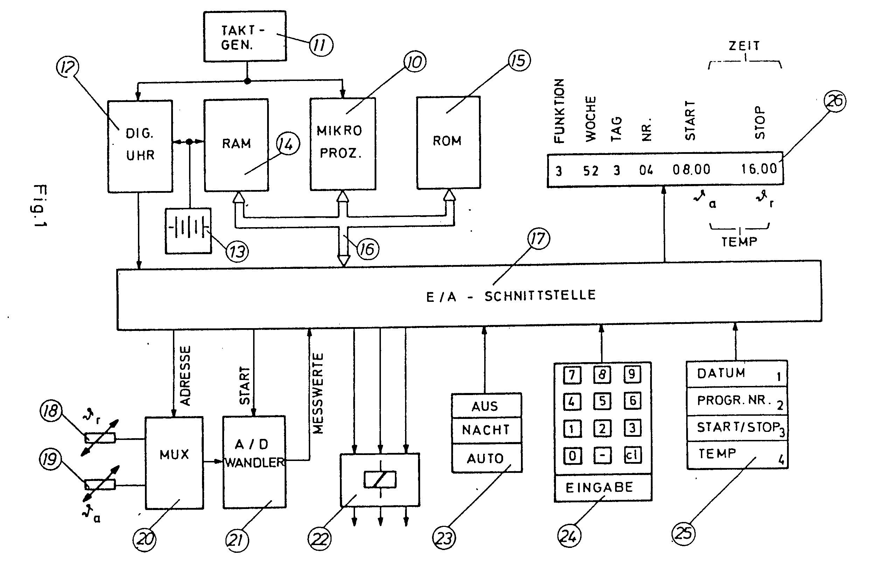

Gemäß Figur 1 bildet ein Mikroprozessor 10 das kernstück des optimierenden Systems. Der Mikroprozessor wird betrieben von einem quarzgesteuerten Taktgenerator 11, der gleichzeitig die Digitaluhr 12 speist, welche bei Netzausfall über eine Batterie 13 für eine bestimmte Zeit weiterarbeitet. Der Mikroprozessor wird gesteuert durch die in einem Festwertspeicher ROM-15 abgelegte Betriebssoftware, welche alle Berechnungs- und Serviceroutinen enthält, während veränderliche Daten wie Belegzeiten, Tabellenwerte und Zwischenberechnungen in einen Speicher RAM-14 mit wahlfreiem Zugriff eingeschrieben bzw. aus diesem gelesen werden. Der Speicher RAM-14 ist ebenfalls über eine Batterie 13 gepuffert und behält die einmal eingeschriebenen Werte während des Netzausfalles bei.

Der Mikroprozessor ist über eine Daten- und Adress- Sammelschiene 16 an eine Schnittstelle 17 angeschlossen. Andererseits werden die von einem Raumtemperaturfühler 18 und einem Außentemperaturfühler 19 erfaßten Temperaturwerte über einen Multiplexer 20 und einen Analog/Digital-Wandler 21 der Schnittstelle 17 zugeführt. Der Multiplexer 20 und der Analog/Digital-Wandler 21 werden hierbei von dem Mikroprozessor über die Schnittstelle gesteuert. Als Ausgabeeinheiten sind drei das Energiesystem betätigende Relais 22 an die Schnittstelle 17 angeschlossen, die zeitabhängig betätigt werden. Über einen an die Schnittstelle 17 angeschlossenen Schalter 23 kann wahlweise das optimierende System abgeschalten, auf Nachtbetrieb umgeschaltet oder auf automatisch optimierende Funktion geschaltet werden. Eine Tastatur 24, 25 erlaubt die Eingabe bzw. das Abrufen von Zahlendaten in bzw. aus den Speichern des Mikroprozessors. Hierbei wird mit den Funktionstasten 25 eine bestimmte Funktion vorgewählt und mit der Zahlentastatur 24 die zugehörigen Daten eingegeben bzw. abgerufen.

Die Anzeige der gewählten Funktion zusammen mit den Daten erfolgt über eine Ziffernanzeige 26, die als Ausgabeeinheit an die Schnittstelle 17 angeschlossen ist.

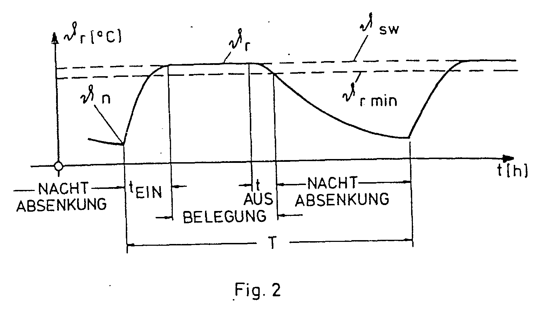

Anhand der Figuren 2-6 sei nunmehr das erfindungsgemäße Verfahren sowie die Wirkungsweise des erfindungsgemäßen System gemäß Figur 1 erläutert.

Figur 2 zeigt den zeitlichen Verlauf der Raumtemperatur in einem typischen Gebäude, in dem durch Ein- bzw. Abschalten der Heizanlage eine Optimierung vorgenommen wird. Nimmt man an, daß zu Beginn der Belegzeit die Raumtemperatur gerade ihren Sollwert $\vartheta_{sw}$ erreicht haben soll, so muß die Heizanlage um die Zeit $t_{EIN}$ vor dem Beginn der Belegzeit einschalten, um den Ram von der momentanen Nachttemperatur $\vartheta_n$ auf $\vartheta_{sw}$ zu bringen. Andererseits kann die Heizanlage schon um die Zeit $t_{AUS}$ vor dem Ende der Belegzeit abgeschaltet werden, so daß die Raumtemperatur am Ende der Belegzeit einen Wert $\vartheta_{r\,min}$ nicht unterschreitet. Aufgabe der Erfindung ist es nun, die Zeiten $t_{EIN}$ und $t_{AUS}$ zu berechnen und mit dem Ergebnis den Ein-bzw. Ausschaltvorgang entsprechend dem eingestellten Zeitprogramm zu steuern.

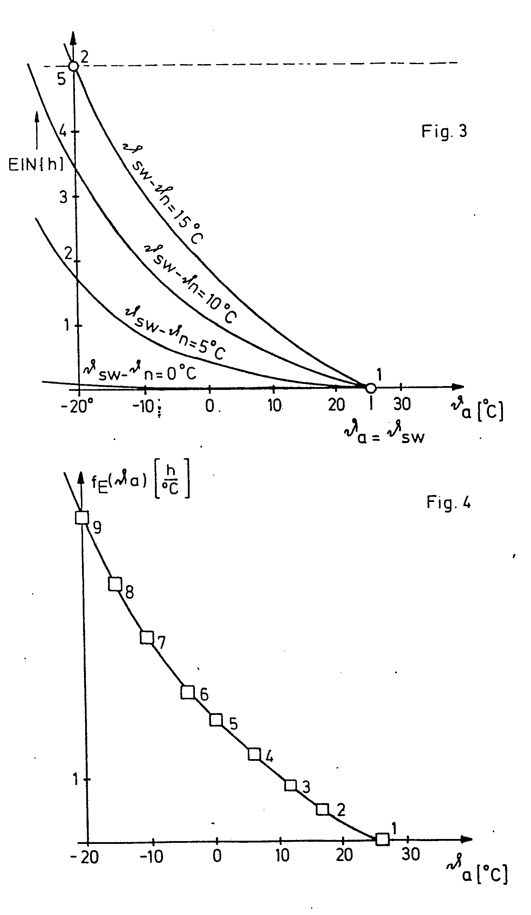

Zur Berechnung der Einschaltzeiten wird von einem prinzipiellen Zusammenhang nach Figur 3 ausgegangen, wobei als Lösungsansatz folgende Annahme gemacht wird :

$$t_{EIN} = (\vartheta_{sw} - \vartheta_n) \cdot f_E(\vartheta_a) \qquad (1)$$

Hierbei ist $f_E(\vartheta_a)$ eine beliebige Funktion, die in Form von Tabellenwerten während der verschiedenen Einschaltvorgänge gemessen wurde, wobei der Tabellenwert

$$f_E(\vartheta_a)_n = \frac{{}^tEIN_n}{\vartheta_{swn} - \vartheta_n} \text{ bei } \vartheta_a = \vartheta_{an} \qquad (2)$$

berechnet und unter der zugehörigen Außentemperatur $\vartheta_{an}$ abgespeichert wird.

Hierbei bedeuten :

$t_{EIN\,n}$ = Gemessene Aufheizzeit bei der Außentemperatur $\vartheta_{an}$, um das Gebäude von $\vartheta_{nn}$ auf $\vartheta_{swn}$ aufzuheizen

$\vartheta_{swn}$ = Temperatursollwert bei Beginn des Aufheizvorganges

$\vartheta_{nn}$ = Raumtemperatur bei Beginn des Aufheizvorganges.

Auf diese Weise werden im Laufe der Zeit von der Funktion $f_E(\vartheta_a)$ diskrete Tabellenpunkte abhängig von der Außentemperatur ermittelt und gespeichert (s. Fig. 4). Für die Berechnung der folgenden Einschaltzeit wird die Außentemperatur gemessen, der Funktionswert laut Fig. 4 ermittelt, wobei zwischen den gemessenen Funktionswerten linear interpoliert wird. Die Einschaltzeit $t_{EIN}$ wird nach (1) errechnet.

Hierbei bedeuten :

$\vartheta_{sw}$ = Aktueller Temperatursollwert zu Beginn des zu errechnenden Aufheizvorganges

$\vartheta_n$ = Aktuelle Raumtemperatur zu Beginn des zu errechnenden Aufheizvorganges

$f_E(\vartheta_a)$ = Funktionswert gültig für die aktuelle Außentemperatur $\vartheta_a$ zu Beginn des zu errechnenden Aufheizvorganges

Für den allerersten Einschaltvorgang wird angenommen, daß einerseits bei einer Außentemperatur gleich der Sollwerttemperatur keine Aufheizzeit benötigt wird (s. Fig. 4, Pkt. 1), andererseits bei einer Außentemperatur, die gleich der Auslegungsgrenze der Heizeinrichtung ist, die maximale Aufheizzeit $t_{EIN\,max}$ benötigt wird (s. Fig. 4, Pkt. 9). Diese Werte sind willkürlich und empirisch ermittelt. Sie dienen jedoch nur für die Ermittlung der allerersten Einschaltzeit und werden dann, wenn tatsächliche Meßpunkte vorliegen, aus dem Tabellenspeicher gelöscht, so daß mit jedem neuen Tabellenwert eine immer genauere Annäherung an den tatsächlichen Zusammenhang erforgt.

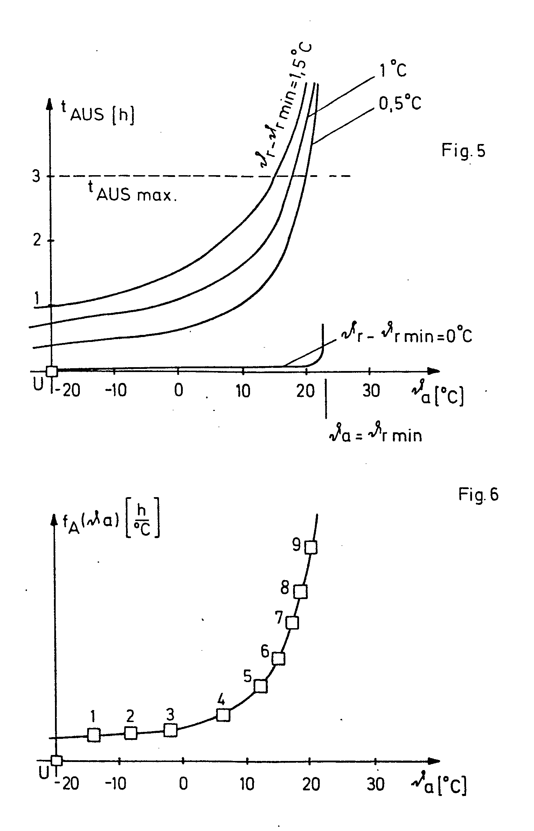

Zur Berechnung der Abschaltzeiten wird von einem prinzipiellen Zusammenhang nach Fig. 5 ausgegangen, wobei als Lösungsansatz folgende Annahme gemacht wird :

$$t_{AUS} = (\vartheta_r - \vartheta_{r\,min}) \cdot f_A(\vartheta_a) \qquad (3)$$

Hierbei ist $f_A(\vartheta_a)$ eine beliebige Funktion, die in Form von Tabellenwerten während der verschiedenen Abschaltvorgänge gemessen wird, bei der Tabellenwert

$$f_A(\vartheta_a) = \frac{{}^tAUS_n}{\vartheta_{rn} - \vartheta_{r\,min\,n}} \text{ bei } \vartheta_a = \vartheta_{an} \qquad (4)$$

berechnet und unter der zugehörigen Außentemperatur $\vartheta_{an}$ abgespeichert wird.

Hierbei bedeuten :

$t_{AUS\,n}$ = Gemessene Abschaltzeit bei der Außentemperatur $\vartheta_{an}$, um das Gebäude von $\vartheta_{rn}$ auf $\vartheta_{r\,min\,n}$ abzukühlen

$\vartheta_{rn}$ = Raumtemperatur bei Beginn des Abschaltvorganges

$\vartheta_{r\,min\,n}$ = Minimale zugelassen Raumtemperatur

Auf diese Weise werden im Laufe der Zeit von der Funktion $f_A(\vartheta_a)$ diskrete Tabellenpunkte abhängig von der Außentemperatur ermittelt und gespeichert (s. Fig. 6). Für die Berechnung der folgenden Abschaltzeit wird die Außentemperatur gemessen und der Funktionswert laut Fig. 6 ermittelt, wobei zwischen den gemessenen Funktionswerten linear interpoliert wird. Die Abschaltzeit $t_{AUS}$ wird nach (3) errechnet.

Hierbei bedeuten :

$\vartheta_r$ = Aktuelle Raumtemperatur bei Beginn des zu errechnenden Abschaltvorganges

$\vartheta_{r\,min}$ = Minimale zugelassene Raumtemperatur zu Beginn des zu errechnenden Abschaltvorganges

$f_A(\vartheta_a)$ = Funktionswert gültig für die aktuelle Außentemperatur $\vartheta_a$ zu Beginn des zu errechnenden Abschaltvorganges

Für den allerersten Abschaltvorgang wird angenommen, daß einerseits bei einer Außentemperatur, die gleich der Auslegungsgrenze der Heizeinrichtung ist, keine frühere Abschaltung vorgenommen werden darf (s. Fig. 6, Pkt. U) andererseits bei einer Außentemperatur gleich der minimal zugelassenen Raumtemperatur die maximale Abschaltzeit $t_{AUS\,max}$ verwendet werden darf (s. Fig. 6, Pkt. 9). Diese Werte sind willkürlich und empirisch ermittelt. Sie dienen jedoch nur für die Ermittlung der allerersten Abschaltzeit und werden dann, wenn tatsächliche Meßpunkte vorliegen, aus dem Tabellenspeicher gelöscht, so daß mit jedem Tabellenwert eine immer genauere Annäherung an den tatsächlichen Zusammenhang erfolgt.

Für die Messung von Ein- bzw. Abschaltzeit gilt gemeinsam :

Die Anzahl der abgespeicherten Tabellenwerte hängt von der gewünschten Genauigkeit ab. Bei der Aufnahme neuer Tabellenwerte wird ein Mittelwert zum alten Tabellenwert gebildet, um Meßfehler oder momentane Störeinflüsse während der Messung (z. B. Windeinfluss) weitgehend zu mildern.

Die erfindungsgemäße Anordnung nach Fig. 1 übernimmt die Messung der Raum- bzw. Außentemperatur über die Fühlereingänge 18 bzw. 19 und führt die oben beschriebene Berechnung durch.

Die errechneten Ein- bzw. Abschaltzeiten werden zur aktuellen Uhrzeit hinzuaddiert und mit der vorprogrammierten Start- bzw. Stopzeit verglichen. Ist die Summe größer als die Start- bzw. Stopzeit, wird ein Signal für Ein- bzw. Abschalten erzeugt und über die Ausgangsstufen 22 zur Verfügung gestellt. Nach dem Ein- bzw. Abschalten werden die tatsächlich benötigten Zeiten gemessen und wie oben beschrieben als Tabellenwerte abgespeichert.

Das vorstehend beschriebene System weist adaptive Eigenschaften auf und ist selbstoptimierend. Im Laufe des Betriebes werden die Gebäudeparameter selbsttätig ermittelt. Ändern sich diese Parameter beispielsweise infolge von Isolationsmaßnahmen am Gebäude, eines anderen installierten Heiz- bzw. Kühlsystems usw., so wird dies berücksichtigt, indem die bei sonst gleichen Bedingungen (Innen- und Außentemperatur) ermittelten Werte die neuen Tabellenwerte unter Umständen nach einer Mittelwertbildung mit den alten Tabellenwerten bilden.

Das vorstehend beschriebene System umfaßt auch eine reine Meßeinrichtung für die Gebäudeparameter, die nach ihrer Ermittlung einer herkömmlichen Steuervorrichtung eingegeben werden könnten.

## Ansprüche

1. Verfahren zum Optimieren des Energieverbrauchs in Gebäuden mit sich nach einem bestimmten Zeitprogramm ändernden Belegzeiten, wobei durch kontrollierendes Ein- bzw. Ausschalten der Energiezufuhr sowohl für die Heizung als auch Kühlung während der Belegzeiten eine vorgewählte Solltemperatur erreicht wird und der Schaltzeitpunkt von vorbestimmten Variablen (Außentemperatur, momentane Raumtemperatur) und Parametern (Isolierwert des Gebäudes) abhängig ist, dadurch gekennzeichnet, daß die tatsächlich benötigen Ein- bzw. Ausschaltzeiten unter Berücksichtigung der jeweiligen Variablen gemessen, gespeichert und der Berechnung der folgenden Ein- bzw. Ausschaltzeiten zugrunde gelegt werden.

2. Verfahren nach Anspruch 1, dadurch gekennzeichnet, daß die Ein- bzw. Ausschaltzeiten bei jedem Ein- bzw. Ausschaltvorgang neu gemessen werden, daß ein Mittelwert zwischen einem schon vorhandenen Tabellenwert und dem aktuellen Meßwert gebildet und in einer Tabelle abhängig von der zum Zeitpunkt der Messung herrschenden Außentemperatur abgelegt wird.

3. Verfahren nach Anspruch 2, dadurch gekennzeichnet, daß zur Berechnung der folgenden Ein- bzw. Ausschaltzeiten ein linearer Zusammenhang zwischen zwei benachbarten Tabellenwerten angenommen wird.

4. Verfahren nach Anspruch 1, dadurch gekennzeichnet, daß nach einem oder mehreren Tagen, an denen keine Ein- bzw. Ausschaltung der Energiezufuhr erfolgte (z. B. Wochenende, Feiertage), die errechnete Einschaltzeit für den folgenden Einschaltvorgang mit einem vorbestimmten Faktor multipliziert wird.

5. Verfahren nach Anspruch 1, dadurch gekennzeichnet, daß an einem Tag mehrere Ein- bzw. Ausschaltvorgänge durchführbar sind.

6. Verfahren nach Anspruch 1, dadurch gekennzeichnet, daß die Ein- bzw. Ausschaltzeit auf einem Maximalwert begrenzt wird, wobei dieser Wert gelichzeitig als Tabellenwert für den allerersten Schaltvorgang benutzt wird.

7. Anordnung zur Durchführung des Verfahrens nach Anspruch 1 oder einem der folgenden, gekennzeichnet durch einem Mikroprozessor (10-14), der die erforderlichen Berechnungen durchführt und der über eine Schnittstelle (17) an entsprechende Ein- und Ausgänge (18-25) sowie an eine Bedien- und Anzeigeeinrichtung (23-26) angeschlossen ist.

8. Anordnung nach Anspruch 7, gekennzeichnet durch eine interne, während Netzausfall batteriegespeiste Digitaluhr (12, 13), deren Zeit mit der errechneten Ein- bzw. Ausschaltzeit verglichen wird, um ein Start- bzw. Stopsignal für die Energiezufuhr zu erzeugen.

9. Anordnung nach Anspruch 7, dadurch gekennzeichnet, daß die Belegzeiten für mindestens ein Jahr im voraus programmiert werden.

10. Anordnung nach Anspruch 7, gekennzeichnet durch eine Frostschutzeinrichtung, die in der Abschaltphase durch An- und Abschalten der Heizenergie ein Absinken der Raumtemperatur unter einen vorbestimmten Minimalwert verhindert.

## Claims

1. Method for optimizing the energy consumption in buildings having an occupation period changing in accordance with a predetermined time program, where at by a controlled switching-on and switching-off respectively of the energy supply for heating as well as for cooling a selected set-point temperature is attained during the occupation period and the switching time is a function of predetermined variables (outside temperature, instantaneous room temperature) and parameters (insulating quality of the building), characterized in that the effectively required points of time for switching-on and switching-off respectively are measured under consideration of the actual variables, are then stored and taken as the basis values when calculating the following point of time for switching-on or off respectively.

2. Method according to claim 1, characterized in that the points of time for switching-on and off respectively in each case of switching-on or off respectively are measured again, that an average value between an already existing value in a table and the actual value is formed and filed in a table as a function of the outside temperature prevailing at the time of measuring.

3. Method according to claim 2, characterized in that for calculating the following points of time for switching-on or off respectively a linear interrelation between two adjacent table values is assumed.

4. Method according to claim 1, characterized in that after one or several days at which no switching-on or off of the energy supply took place (e.g. weekends, holidays) the calculated point of time of switching-on for the following switching-on procedure is multiplicated with a predetermined factor.

5. Method according to claim 1, characterized in that during a day a plurality of switching-on or off procedures may be performed.

6. Method according to claim 1, characterized in that the point of time for switching-on or off respectively is limited to a maximum value where at said value is used as a table value for the very first switching procedure.

7. Apparatus for performing the method according to claim 1 or one of the following claims, characterized by a microprocessor (10-14), which is performing the required calculations and which is connected by means of an interface unit (17) to corresponding inputs and outputs (18-25) as well as to a control and display device (23-26).

8. Apparatus according to claim 7, characterized by an internal digital clock (12,13) supplied by a battery during black-out of the main supply the time of which being compared with the calculated point of time for switching-on of off respectively for producing a start resp. stop signal for the energy supply.

9. Apparatus according to claim 7, characterized in that the occupation time is programmed for at least one year in advance.

10. Apparatus according to claim 7, characterized by an antifreezing device, which during the switching-off phase by means of switching-on and switching-off the heating energy prevents a decrease of the room temperature below a predetermined minimum value.

**Revendications.**

1. Procédé pour optimiser la consommation d'énergie dans des bâtiments avec des temps d'occupation variant suivant un programme temporel déterminé, une température de consigne présélectionnée étant atteinte par enclenchement et coupure contrôlés de la fourniture d'énergie aussi bien pour le chauffage que pour le refroidissement pendant les temps d'occupation et l'instant de commande étant fonction de variables prédéterminées (température extérieure, température ambiante momentanée) et de paramètres (valeur d'isolation du bâtiment), caractérisé en ce que les temps d'enclenchement et de coupure effectivement nécessaires sont mesurés en tenant compte des variables correspondantes, mémorisés et sont utilisés dans le calcul des temps suivants d'enclenchement et de coupure.

2. Procédé selon la revendication 1, caractérisé en ce que les temps d'enclenchement et de coupure sont à nouveau mesurés à chaque processus d'enclenchement et de coupure, en ce qu'une valeur moyenne est établie entre une valeur de tabulation déjà existante et la valeur de mesure actuelle et est placée dans un tableau en fonction de la température extérieure régnant à l'instant de la mesure.

3. Procédé selon la revendication 2, caractérisé en ce que, pour le calcul des temps d'enclenchement et coupure suivants, on suppose une relation linéaire entre deux valeurs de tabulation adjacentes.

4. Procédé selon la revendication 1, caractérisé en ce que, après un ou plusieurs jours où il ne s'est produit aucun enclenchement ou coupure de la fourniture d'énergie (par exemple fin de semaine, jours de fête), le temps d'enclenchement calculé pour le processus d'enclenchement suivant est multiplié par un facteur prédéterminé.

5. Procédé selon la revendication 1, caractérisé en ce que, en une journée, on peut effectuer plusieurs processus d'enclenchement ou coupure.

6. Procédé selon la revendication 1, caractérisé en ce que le temps d'enclenchement ou coupure est limité à une valeur maximale, qui est simultanément utilisée comme valeur de tabulation pour le premier processus de commande.

7. Installation pour la mise en œuvre du procédé selon l'une quelconque des revendications 1 à 6, caractérisée en ce qu'elle comprend un microprocesseur (10-14), qui effectue les calculs nécessaires et qui est relié, par l'intermédiaire d'une interface (17), à des entrées et sorties correspondantes (18-25) ainsi qu'à un dispositif de service et d'indication (23-26).

8. Installation selon la revendication 7, caractérisée en ce qu'il est prévu une horloge numérique (12, 13), alimentée par batterie en cas de panne du secteur et dont le temps est comparé avec le temps d'enclenchement ou coupure qui a été calculé, afin de produire un signal de démarrage ou d'arrêt de la fourniture d'énergie.

9. Installation selon la revendication 7, caractérisée en ce que les temps d'occupation sont programmés à l'avance pour au moins une année.

10. Installation selon la revendication 7, caractérisée en ce qu'il est prévu un dispositif de protection contre le gel, qui empêche, dans la phase de coupure, une diminution de la température ambiante en dessous d'une valeur minimale prédéterminée par enclenchement et arrêt de l'énergie de chauffage.

Fig.1

$-2\frac{}{4}$

Fig. 2

Fig. 3

Fig. 4

Fig. 5

Fig. 6